# EUROPEAN PATENT SPECIFICATION

(11) **EP 3 659 226 B1**
(45) Date of publication and mention of the grant of the patent: **15.10.2025**
(21) Application number: 18749143.6
(22) Date of filing: 09.07.2018
(51) Int. Cl.: H02G 3/14

(54) **COMPOSITE COVER PLATE FOR WALL-MOUNTING MODULAR ELECTRIC APPARATUSES AND GROUP OF PARTS FOR WALL -MOUNTING MODULAR ELECTRIC APPARATUSES**
VERBUNDDECKPLATTE FÜR WANDMONTIERTE MODULARE ELEKTRISCHE VORRICHTUNGEN UND GRUPPE VON TEILEN ZUR WANDMONTAGE MODULARER ELEKTRISCHER VORRICHTUNGEN
PLAQUE DE RECOUVREMENT COMPOSITE POUR APPAREILS ÉLECTRIQUES MODULAIRES À MONTAGE MURAL ET GROUPE DE PIÈCES POUR APPAREILS ÉLECTRIQUES MODULAIRES À MONTAGE MURAL

(30) Priority: 24.07.2017 IT 201700084040
(43) Date of publication of application: 03.06.2020
(73) Proprietor: BTICINO S.P.A., 21100 Varese (VA) (IT)
(72) Inventor: BROGIOLI, Marco, 21100 Varese (IT); ROCERETO, Pietro, 21100 Varese (IT)
(74) Representative: Carangelo, Pierluigi
(86) International application number: PCT/IB2018/055039
(87) International publication number: WO 2019/021089

(56) References cited:
- EP-A1- 1 675 240
- US-A- 4 359 619
- US-A- 5 457 286
- US-A- 5 457 286
- US-A1- 2011 259 722
- US-A1- 2017 025 835
- US-B1- 7 586 040
- US-B1- 9 608 418

## Description

The present invention relates to the technical field of devices for wall-mounting modular electrical apparatuses and, more in particular, relates to a composite cover plate and to a group of parts for wall-mounting modular electrical apparatuses.

For the purposes of the present description, modular electrical apparatus indicates, in general, any electrical means or device generally belonging to electrical installations in residential buildings and the like and which is usually intended to be mounted on, e.g. embedded in, walls of such buildings by the side of other modular electrical apparatuses.

Therefore, this definition includes, but is not limited to, switches, power sockets, data network sockets, TV sockets, telephone sockets, pushbuttons, switches, multiway switches, control electrical devices in general, connectors, thermostats, timers, fuse holders, ringers/buzzers, emergency lights, e.g. removable, signaling lights, e.g. step markers, displays, e.g. LCDs, and the like.

As known, the modular electrical apparatuses mentioned above are usually installed on a wall forming composite mounting structures or groups of parts, generally including:
- a plurality of modular electrical apparatuses;
- a box intended to be embedded in the wall;
   - a supporting frame which can be fixed to the box, either directly or via adapters, called mud rings, and adapted to support the plurality of modular electrical apparatuses arranged mutually side-by-side; and
   - a cover plate which can be fixed to the supporting frame and is provided with a through opening for allowing a user to access, either visually or manually, the modular electrical apparatuses installed on the supporting frame.

The aforesaid groups of parts are often named "electrical points".

In the electrical points indicated above, the cover plate is used both to ensure a minimum protection for electrical apparatuses, e.g. from dust, and to prevent dangerous access (e.g. by means of sharp objects) to the electrically conductive parts of electrical apparatuses. A further purpose of the cover plate is also to act as a shield to prevent an output towards the outside of electrical arcs, flames, incandescent wires in order to prevent starting fires.

Another important task of the cover plate is to mask flaws produced, for example, by the presence of a cavity in the wall and by the presence of the box and of the mounting frame which, rather than having appearance value, have a functional value difficult to reconcile with requirements or principles of appearance.

Furthermore, ever more often, cover plates not only are used for masking flaws, but become decorative furnishing elements themselves, i.e. elements which play an important part in forming and characterizing the furnishings of an interior environment.

In particular, in this regard, it is known to manufacture cover plates in different colors, materials or shapes in order to allow them to adapt to the environments in which they are installed, whereby satisfying the demands and needs of different consumers.

However, it is apparent that from the manufacturing point of view, making available many plates of different colors, materials and shapes considerably complicates the manufacturing and storage processes for a manufacturer. This poses a serious limit to the range of models of plates available on the market, in order to avoid an excessive increase in investment and manufacturing costs.

It is therefore understandable that mutually conflicting technical-manufacturing needs and commercial needs exist in the field of manufacturing of cover plates: on one hand, for simplifying manufacturing, lowering the respective costs and simplifying stock management, it would be preferable not to have an excessive diversification between different models of cover plates, while on the other hand, in order to better satisfy market demands it would be appropriate to have a maximum variety of available shapes, colors, materials and patterns.

The present invention aims to provide a solution which makes it possible to reconcile these opposite requirements; in other words, the present invention thus relates to providing a cover plate for electrical appliances applicable to wall, with features such as to allow manufacturing it according to the wider availability of colors and materials, while overcoming the limitations mentioned in relation to the background art.

In this regard, a solution has been made already disclosed in WO2006106555 A1, which describes a composite cover plate which, although very successful and widely marketed, is a solution which, to a certain extent, complicates the automated assembly of the composite cover plate. Further examples of prior art cover plates are disclosed in US5457286A, US4359619A, US7586040B1, US2017/025835A1.

The purpose of the present invention is therefore to provide a composite cover plate which is also relatively easy to assemble. Such object is achieved by means of a composite cover plate, as defined in the appended claim 1 in its most general form and in the dependent claims in several particular embodiments.

A further aspect of the present invention is to make available a group of parts for wall-mounting modular electrical apparatuses as defined in appended claim 14.

The invention will be better understood from the following detailed description of a preferred embodiment, made by way of non-limiting example with reference to the accompanying drawings, in which:
- figure 1 shows an axonometric view with separate parts of an embodiment of an assembly of parts comprising a composite cover plate for wall-mounting modular electrical apparatuses, wherein the composite cover plate includes a plurality of first and second cover elements, wherein one of the second cover elements is shown overturned with respect to the remaining ones in figure 1;
- figure 2 shows an axonometric view of the composite cover plate of the group of parts in figure 1;
- figure 3 shows a front elevation plan view of the composite cover plate of the group of parts in figure 1;

- figure 4 shows an axonometric view of a possible variant embodiment of the composite cover plate in figure 2;
- figure 5 shows an axonometric view of a further variant embodiment of the composite cover plate in figure 2;
- figure 6 shows a front elevation plan view of the composite cover plate in figure 2 from which two second cover elements were removed to make the base body of the cover plate partially visible;
- figure 7 shows a bottom plan view of the composite cover plate in figure 2 in the configuration in figure 6;
- figure 8A shows a bottom plan view of the base body of the composite cover plate in figure 1, comprising two mounting crosspieces and two connection uprights;
- figure 8B shows a front elevation plan view of the base body of the composite cover plate in figure 1;
- figure 9 shows an axonometric view of a first embodiment of one of the first cover elements which can be coupled to a connection upright of figure 8;
- figure 10 shows a first axonometric view of a second embodiment of one of the first cover elements which can be coupled to a connection upright in figure 8;
- figure 11 is a second axonometric view of the cover element in figure 10;
- figure 12 shows an axonometric view of one of the second cover elements which can be coupled to the mounting crosspieces;
- figure 13 shows an axonometric view of the second cover element in figure 12 from which some parts were removed;
- figure 14 shows an axonometric view of one of the parts removed in figure 13 respect to figure 12;
- figure 15 shows an axonometric view of another embodiment of one of the second cover elements;
- figure 16 shows an axonometric view of the second cover element in figure 15 with some parts removed;
- figure 17 shows a rear elevation plan view of the cover plate in figure 6;
- figure 18 shows a section plan view of the group of parts in figure 1 along a plane transverse to the mounting crosspieces, in which the group of parts is in a resting configuration;
- figure 19 shows a section plan view in figure 18, in which the group of parts is in a first actuating configuration;
- figure 20 shows a section plan view in figure 18, in which the group of parts is in a second actuating configuration.

Similar or equivalent elements in the figures are indicated by the same reference numerals.

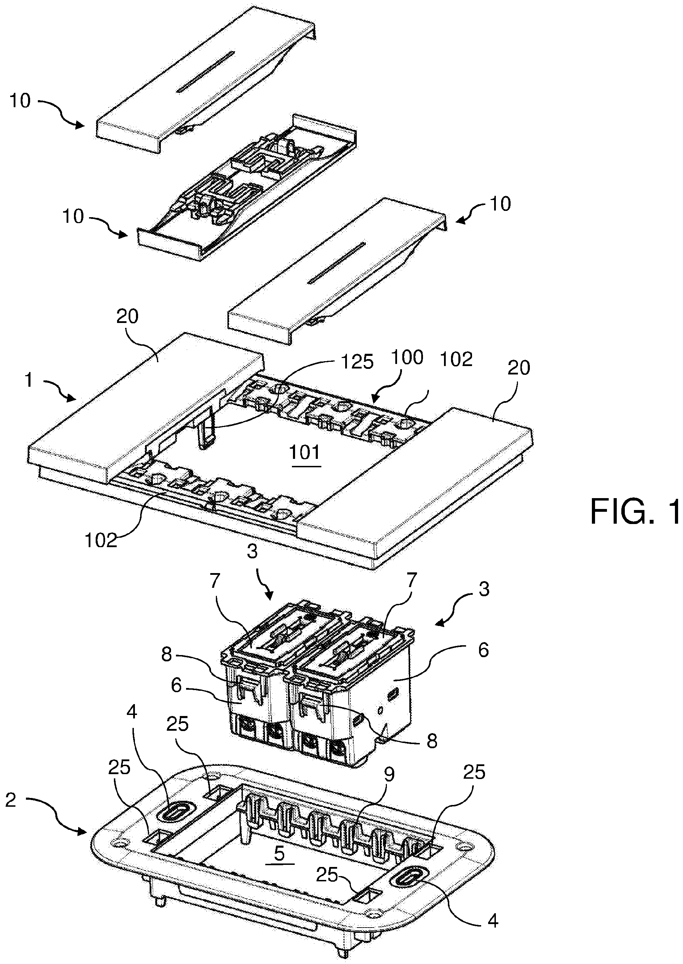

Figure 1 shows a group of parts for wall-mounting modular electrical apparatuses 3, e.g. such as modular switches 3 of a residential electrical installation, e.g. of a domestic electrical system. In the present description, the aforesaid group of parts can also be indicated with the expression "electrical point".

The electrical point comprises a supporting frame 2 intended to be fixed, in the example by means of a pair of screws which can be inserted into respective through holes 4, to a mounting wall or to an electrical box which can be embedded in the wall, not shown in the figures.

The supporting frame 2 has a frame-shaped base body, comprising the four frame sides in mutually parallel and opposite in pairs, preferably made of electrically insulating material, e.g. hard plastic. Two of the aforesaid opposite frame sides are provided with interlocking and snap fixing elements 9 to allow the fixing of the modular electrical apparatuses 3 provided with conjugated interlocking and snap fixing elements 8.

The supporting frame 2 comprises an assembly window 5 in which one or more modular electrical apparatuses 3 can be fixed. Preferably, the modular electrical apparatuses 3 can be fixed to the supporting frame 2 by means of the aforesaid conjugated interlocking and snap fixing elements 8. In the non-limiting example in figure 1, the modular electrical apparatuses 3 are three electrical pushbutton switches. Each one comprises a casing 6 and a pushbutton 7, e.g. constrained to the casing 6 so as to be able to slide axially with respect to the casing 6. The casing 6 encloses the electromechanical electrical switching members inside. The casing 6 preferably comprises the aforesaid conjugated interlocking and snap fixing elements 8, which are adapted to engage with the fixing elements 9 of the supporting frame 2. Preferably, the aforesaid conjugated interlocking and snap fixing elements 8 are provided on two opposite outer faces of the casing 6, only one of which is shown in figure 1. A non-limiting example of interlocking and snap fixing system between modular electrical apparatuses and a supporting frame is described in patent publication WO2006123379 A1.

It is worth noting that there is no restriction regarding the number and type of modular electrical apparatuses 3 which can be fixed to the supporting frame 2 with the exception of possible limitations imposed by modularity. By way of non-limiting example only, the following can be fixed to the supporting frame 2 (which in the non-limiting example is for three modules) alternatively to the three electrical pushbutton switches:
- two one-module switches and one one-module electrical socket; or
- two one-module electrical sockets and one one-module switch; or
- one two-module electrical socket (e.g. a Schuko socket) and one one-module electrical switch or electrical socket.

As explained above, in general, the definition of modular electrical apparatus includes, but is not limited to, switches, power sockets, data network sockets, USB sockets, TV sockets, telephone sockets, pushbuttons, switches, multiway switches, control electrical devices in general, connectors, thermostats, timers, fuse holders, ringers/buzzers, emergency lights, e.g. removable, signaling lights, e.g. step markers, displays, e.g. LCDs, and the like.

The supporting frame 2 comprises a plurality of fixing seats or channels 25, preferably defined in the frame-shaped base body so as to allow fixing a composite cover plate 1 to the supporting frame 2. Preferably, there are four fixing seats or channels 25.

The group of parts further comprises a composite cover plate 1 adapted and configured to be fixed to the supporting frame 2.

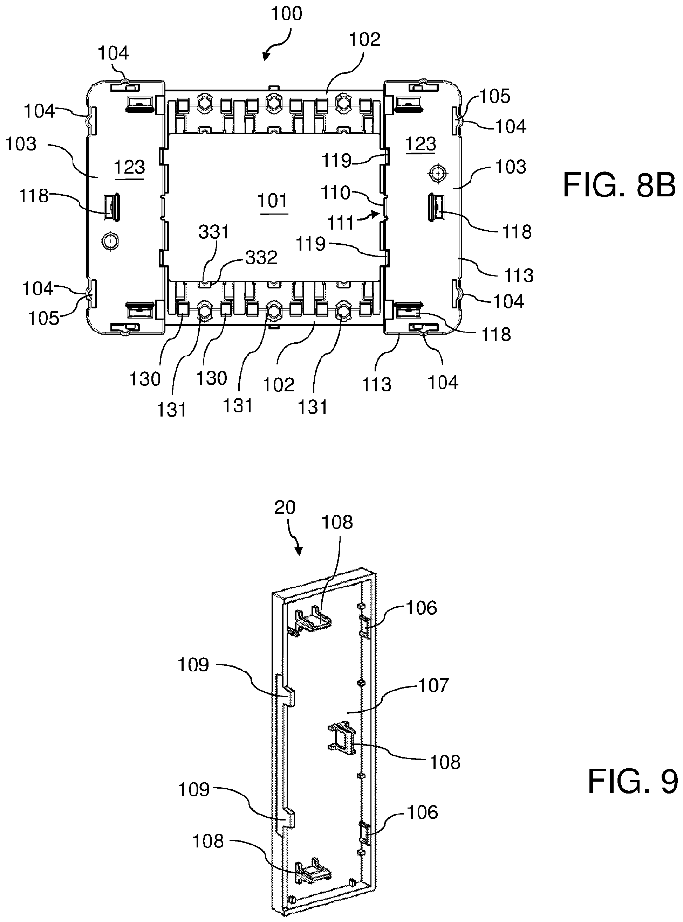

The composite cover plate 1 comprises a frame-shaped base body 100, shown in greater detail in figure 8B, which extends about a through opening 101.

The cover plate 1 preferably comprises a plurality of fixing teeth 125, four fixing teeth in the example, which protrude from the base body 100 towards the supporting frame 2, each of which is adapted to engage in a respective fixing seat or channel 25. A non-limiting example of fixing system between a cover plate and a supporting frame is described in European patent EP1867026 B1.

The base body 100 comprises two crosspieces 102 arranged on opposite sides with respect to the through opening 101, two connection uprights 103 mutually arranged on opposite sides with respect to the through opening 101 and adapted to connect, or which connect, the two crosspieces 102 to each other. The crosspieces 102 will be named mounting crosspieces 102 hereinafter without because of this introducing any limitation. For example, the base body 100 is made of plastic material, e.g. by molding. Preferably, the base body 100 forms a single piece.

There may also be more than two connection uprights 103 of the base body 100, e.g. by envisaging one or more intermediate connection uprights, e.g. a central connection upright between the two connection uprights 103 shown in figure 8B.

Preferably, the cover plate 1 comprises a plurality of second cover elements 10,11,12 arranged mutually side-by-side between the connection uprights 103 to cover all or part of the through opening 101. Preferably, each of the second cover elements 10,11,12 can be associated with a respective modular electrical apparatus 3. For example, with reference to figure 1, each of the second three cover elements 10 can be associated with a respective modular electrical apparatus 3, although only two modular electrical apparatuses 3 are shown in figure 1. For the purposes of the present description, the word "associated" means that it can be placed into a functional relationship, e.g. to achieve a functional mechanical and/or electrical interaction, or into a positional relationship, e.g. in an alignment relationship, with a respective modular electrical apparatus 3.

According to an advantageous embodiment, the cover plate 1 comprises coupling elements 230 adapted to mechanically couple the second cover elements 10,11,12 to the mounting crosspieces 102 of the base body 100. For this reason, in the described examples and without because of this introducing any limitation, the crosspieces 102 are named mounting crosspieces 102.

In the composite cover plate 1, the second cover elements 10,11,12 are advantageously superposed on the mounting crosspieces 102 to cover the mounting crosspieces 102 of the frame-shaped base body 100 in addition to through opening 101. Preferably, the second cover elements 10,11,12 frontally cover the mounting crosspieces 102 in their entirety.

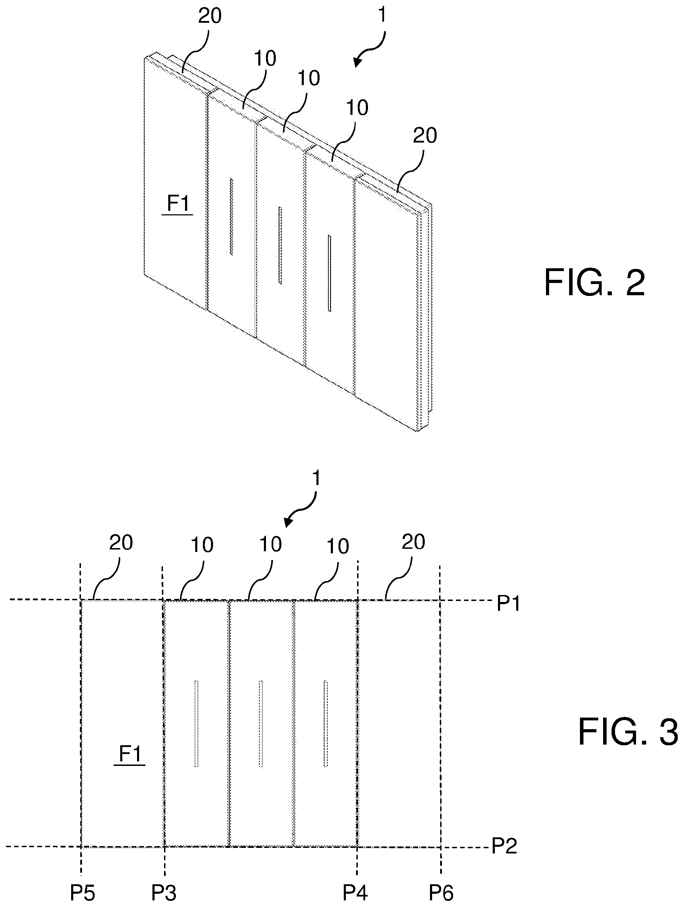

Preferably, the plurality of the second cover elements 10,11,12 defines an array of cover elements having a flat front surface, such as for example the flat front surface shown in figure 3. More preferably, the aforesaid array of cover elements has at least one pair of opposite flat side faces, such as, for example, the opposite faces arranged along the planes P1 and P2 in figure 3 perpendicular to the front face. For example, the aforesaid array of cover elements has two pairs of flat opposite side faces. In figure 3, one of such pairs is formed by the opposite faces arranged along the planes P1 and P2 perpendicular to the front face and the other pair is formed by the opposite faces arranged along the planes P3 and P4 perpendicular to the front face.

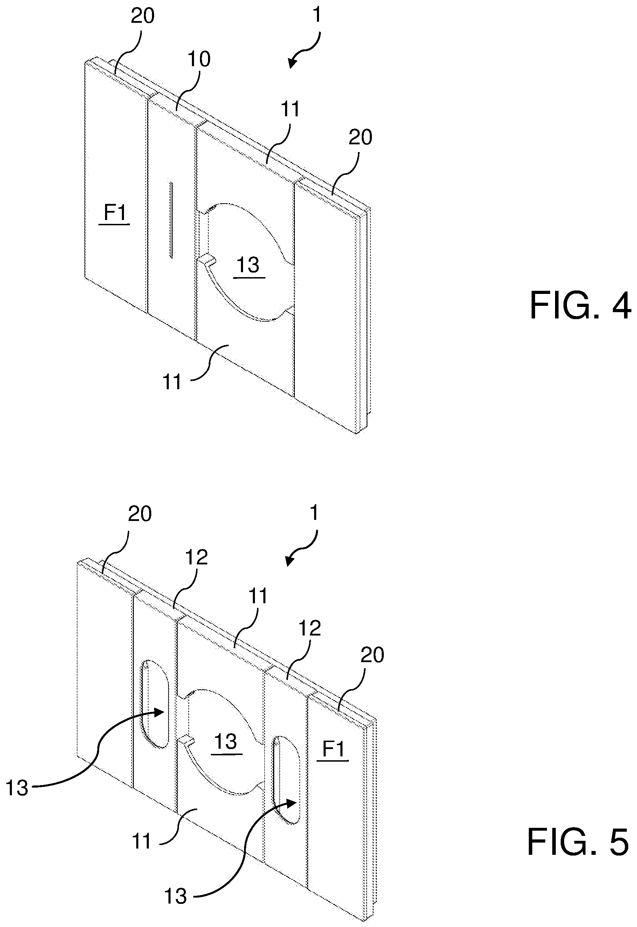

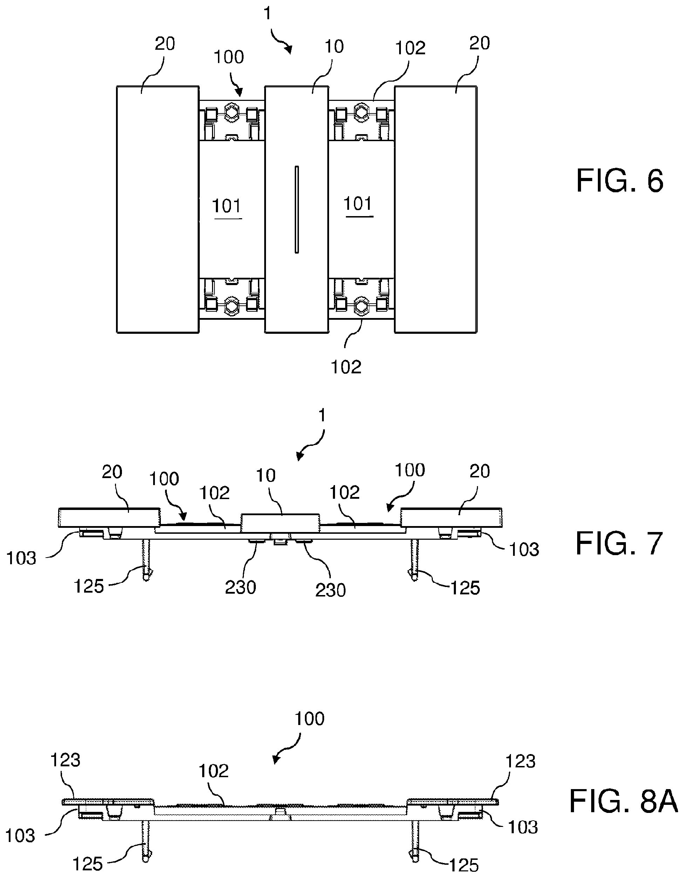

With reference to figure 6, according to an advantageous embodiment, the cover plate 1 comprises at least one second cover element 10 which extends between the mounting crosspieces 102 transversely to the mounting crosspieces 102 over the through opening 101. If such second cover element 10 is free from a through window, it may be a simple plug (or a false terminal) or may be an actuation pushbutton of a switch, for example. Figure 5 shows an alternative embodiment of second cover elements 12 which comprise a through window 13 defined in the thickness of the cover element 12, in order to make the covering of a modular electrical apparatus, which is a socket, e.g. an electricity grid socket.

With reference to figures 4 and 5, the second cover elements 11 may be split in two separate parts, each of which can be coupled to a respective mounting crosspiece 102, defining a through window 13 between the two parts, in order to make the cover of a modular electrical apparatus, which is a socket, e.g. a Shuko electrical socket. It is therefore apparent that, for the purposes of the present description, the word "element" when used in the expression "cover element" also contemplates the embodiment of an element which is a "cover assembly", i.e. a functional entity which includes several cover pieces which are separated from one another.

Without dwelling on the possible types of second cover elements 10, 11, 12 of the cover plate 1 any further, it is worth noting that such types may comprise continuous plates, as in figures 2 and 3, to make plugs or cover and actuation elements of the modular electrical apparatuses or may be perforated or split plates, as in figure 5, to make socket covers, it being obviously also possible to have various combinations, such as the one shown in figure 4, in which the second cover element 10 is, for example, an actuating pushbutton of a switch (or cover and actuation element) and the second cover element 11 is divided into two parts for covering a Shuko socket.

The cover plate 1 comprises a plurality of first cover elements 20 comprising a first cover element 20 fixed to one of the connection uprights 103 and a further first cover 20 fixed to the other connection upright 103, each of the first cover elements 20 being such as to cover a respective connection upright 103.

According to an advantageous embodiment, the second cover elements 10,11,12 are interposed between the first cover elements 20. Preferably, the plurality of the second cover elements 10,11,12 defines, together with the plurality of first cover elements 20, an array of cover elements having a flat front surface F1, such as for example the main face F1 shown in figure 3. Said flat front face F1 is one of the two main faces of the cover plate 1. The aforesaid array of cover elements has at least one pair of opposite flat side faces, such as, for example, the opposite faces arranged along the planes P1 and P2 in figure 3 perpendicular to the front face. For example, the aforesaid array has two pairs of flat opposite side faces. In figure 3, one of such pairs is formed by the opposite faces arranged along the planes P1 and P2 perpendicular to the front face and the other pair is formed by the opposite faces arranged along the planes P5 and P6 perpendicular to the front face.

The first cover elements 20 are fixed to the respective connection uprights 103 by means of fixing elements, which in an advantageous non-limiting embodiment are interlocking and snap fixing elements. With reference to figures 8-11 the interlocking and snap fixing elements comprise elastically deformable elements 104 arranged on one or more peripheral, preferably outer, edges 113 of the connection uprights 103. These elastically deformable elements 104 are preferably made in a single piece with the connection uprights 103, e.g. by injection molding. The elastically deformable elements 104 are arranged close to, e.g. by the side of, a respective through opening 105 defined in the thickness of the connection uprights 103. The elastically deformable elements 104 are wave-shaped bridges and have a rounded central portion and two straight opposite end portions.

Providing elastically deformable elements 104 on the connection uprights 103 has, among others, the advantage of making it possible to fix first cover elements 20 made of materials having very low elastic deformability, e.g. made of metallic materials, such as for example aluminum or metal alloy Zamak, in a particularly easy way to connection uprights 103. Furthermore, regardless of the material used to make the cover elements 20, providing elastically deformable elements 104 on the connection uprights 103 has the advantage of reducing possible irreversible deformations or damage of the first cover elements 20, which could have a strong negative impact from the aesthetic point of view.

In accordance with an embodiment, the connection uprights 103 each comprise a fixing plate 123 to which a respective first cover element 20 is coupled. According to an advantageous embodiment, the mounting crosspieces 102 are in retracted position with respect to the fixing plates 123.

According to an advantageous embodiment, the elastically deformable elements 104 are arranged on such fixing plates 123. Preferably, the fixing plates 123 comprise a portion protruding laterally with respect to a remaining portion of the connection upright 103. More preferably, the elastically deformable elements 104 are arranged on such protruding portion.

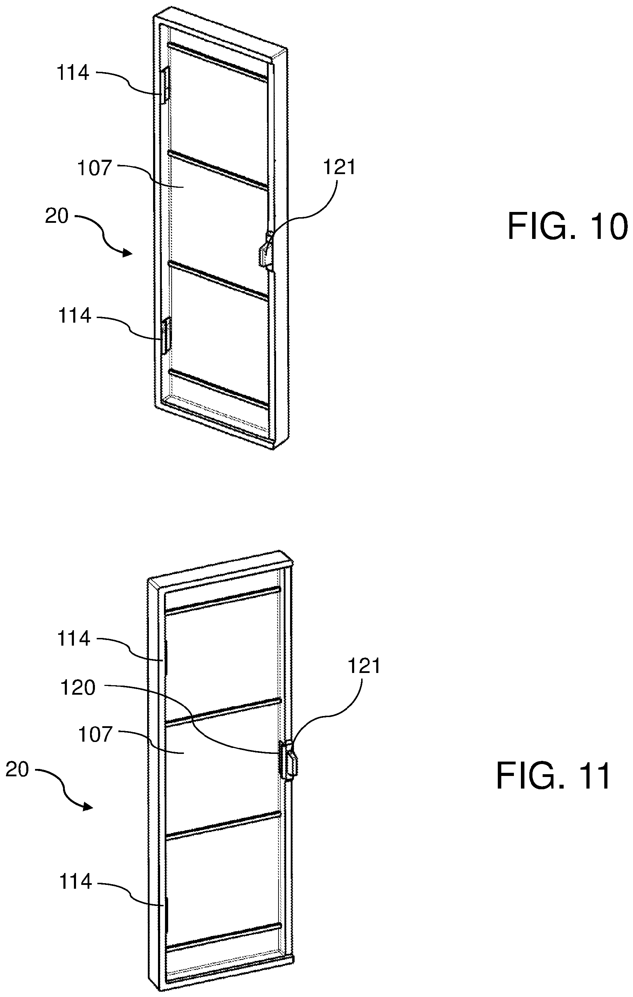

The elastically deformable elements 104 are adapted and configured to engage with seats 106 (shown in figure 9) or projections 114 (shown in figure 10) present on one face 107 of the first cover elements 20 facing towards the associated connection upright 103. Said face 107 in practice is the rear face of the first cover elements 20.

Figure 9 shows a first example of a first cover element 20 which can be conveniently made of plastic, e.g. ABS, which comprises one or more seats 106, equal to two in figure 9, in which respective elastically deformable elements 104 are engaged. In this example, the first cover element 20 further comprises one or more coupling teeth 108, which are three in figure 9, which project from the rear face 107 of the first cover element 20 to be inserted into respective coupling seats or openings 118 defined in the thickness of the connection upright 103, more specifically defined in the thickness of the fixing plates 123. So, it should be noted that in the aforesaid embodiment in figures 8A, 8B and 9, the connection upright 103 comprises a distributed system of coupling elements comprising at least one coupling element 104 arranged on a peripheral edge 113 and at least one coupling element (in the example, the coupling seats or openings 118) made in the thickness of the connection upright 103 and arranged spaced from the peripheral edge 113.

In the specific example in figure 9, the first cover element 20 also comprises one or more positioning and abutment wings 109 adapted to engage with respective recesses 119 provided on the connection upright 103 and in particular on a peripheral edge opposite to the peripheral edge 113 on which the least one elastically deformable element 104 is arranged.

Figures 10 and 11 show another possible embodiment of a first cover element 20, conveniently made of metallic material or metal alloy, e.g. aluminum or zamak. This cover element 20 comprises at least one projection 114 (two projections 114 are shown in figure 10) adapted to engage with a respective deformable coupling element 104 of the connection upright 103. In order to guarantee a better hold, the first cover element 20 comprises a further projection 120 adapted to engage with a tooth 110 of the connection upright 103 arranged on a peripheral edge opposite to the peripheral edge 113 on which the least one elastically deformable element 104 is arranged. In the example in figures 10 and 11, the first cover element 20 also comprises a positioning wing 121 adapted to be inserted in a counter-shaped seat 111 provided in the aforesaid counter-shaped peripheral edge.

The description provided above with reference to the first cover elements 20 is preferably also applicable in the case in which such cover elements 20 are applied to intermediate connection uprights, if at least one connection upright (not shown in the figures) is interposed between two connection uprights 103 placed on opposite sides of the base body 100.

Some advantageous embodiments of the second cover elements 10, 11, 12 will now be described in greater detail.

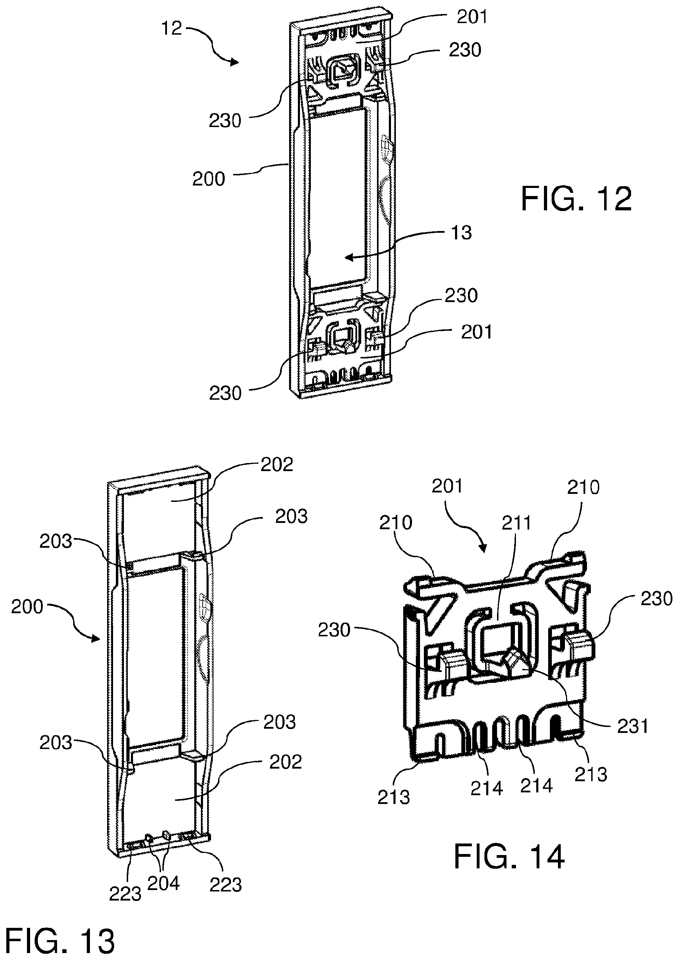

Now making non-limiting reference for the sake of simplicity to the second cover element 12 shown in figure 12, which shows a cover element of a modular apparatus which is an electricity socket, the second cover element 12 comprises a plate-shaped body 200 and coupling elements 230 fixed to the plate-shaped body 200, adapted and configured to mechanically couple the second cover element 12 to the cover plate 1, and in particular to the base body 100, and more in particular to the mounting crosspieces 102. In accordance with an embodiment, the coupling elements 230 makes it possible to constrain the plate-shaped body 200 of the second cover element 12 to the cover plate 1, so that the plate-shaped body 200 can move with respect to the mounting crosspieces 102 between two opposite stroke end positions, in one of which the plate-shaped body 200 is relatively closer to the mounting crosspieces 102 and in the other of which the plate-shaped body 200 is relatively further from the mounting crosspieces 102. For example, the aforesaid coupling elements 230 comprise snap-coupling teeth, which are four in figure 12, which once inserted in the respective engagement seats 130 defined in a mounting crosspiece 102 allow the second cover element 12 to translate by a given stroke with respect to the cover plate 1, in particular with respect to the base body 100 and more in particular with respect to the mounting crosspiece 102. Such snap-coupling teeth, in order to prevent an accidental detachment of the second cover element 12 from the mounting crosspieces 102, once inserted in the respective engagement seats 130 cannot be pulled out unless forcibly or intentionally.

Advantageously, the second cover element 12 comprises alignment means 211, 231 adapted to be operatively interposed between the second cover element 12 and the cover plate 1, and in particular the base body 100 and more in particular a mounting crosspiece 102, to maintain, in the absence of external forces, the plate-shaped body 200 in the stroke end position, in which it is relatively further away from the cover plate 1, and in particular from the base body 100, and more in particular from the mounting crosspiece 102. Preferably, such alignment means 211, 231 comprise at least one elastic element 211 operatively interposed between the plate-shaped body 200 and the base body 100 and in particular the mounting crosspiece 102.

Preferably, the alignment means 211, 231 make it possible to obtain an alignment between the plate-shaped body 200 and the base body 100 (and in particular the mounting crosspiece 102) along three mutually perpendicular axes. For example, in order to obtain a three-axial alignment, the alignment means 211, 231 comprise an elastic element 211 adapted to apply a thrust force along an axis and comprise a centering tooth 231 on which the aforesaid elastic element 211 acts and which is wedge-shaped on a transverse plane, e.g. perpendicular, to said axis. In the example, the centering tooth 231 is inserted into a recess 131 with at least in part counter-shaped section provided on the mounting crosspiece 102. The elastic element 211 preferably performs an elastic suspension function for the plate-shaped body 200 of the cover element 12. Preferably, the centering tooth 231 is fixed to the elastic element 211 and more preferably forms a single piece with the latter.

According to an advantageous embodiment, the second cover element 12 comprises a support device 201 of the aforesaid alignment means which can be or is coupled, either reversibly or irreversibly, to the plate-shaped body 200, e.g. by means of a interlocking and snap coupling.

With reference to figures 12-14, according to an advantageous embodiment, both the aforesaid coupling elements 230 and the aforesaid alignment means 211, 231 belong to the support device 201 which can be coupled to the plate-shaped body 200, either reversibly or irreversibly by means of a interlocking and snap coupling. In the particular example shown, both the coupling elements 230 and the alignment means 211, 231 belong to a support device 201 can be fixed to the plate-shaped body 200, preferably in a respective seat 202 defined in the plate-shaped body 200. In the example, such fixing occurs by means of interlocking and snap fixing elements comprising mutually cooperating abutments 203 and elastic elements 210.

Preferably, the second cover element 12 comprises a centering system adapted to center the support device 201 with respect to the plate-shaped body 200, preferably along two or three axes which are perpendicular to one another. In the example in figures 12-14, the centering system is a distributed centering system which also comprises two wings 204 in addition to the abutments 203 and the elastic elements 210, which wings can be inserted in the respective seats 214 and mutually cooperating projecting elements 213,223. The aforesaid centering system makes it possible to contrast a rotation of the support device 201 with respect to the plate-shaped body 200 along an axis perpendicular to the plate body 200 and a translation of the support device 201 with respect to the plate-shaped body 200 along said axis and thus makes it possible to center the support device 201 with respect to the plate-shaped body 200 along three axes perpendicular to one another.

As can be seen in figures 12-14, the second cover element 12 comprises two of the aforesaid mutually opposite support devices 201, each designed to couple the plate-shaped body 200 to a respective mounting crosspiece 102.

Each of the second disjointed cover elements 11 in figures 4 and 5 may also include at least one support device 201 of the type described above. For example, since the second cover element 11 has double modularity, each of its two disjointed parts 11 may comprises two support devices 201 arranged mutually side-by-side to couple with a same mounting crosspiece 102.

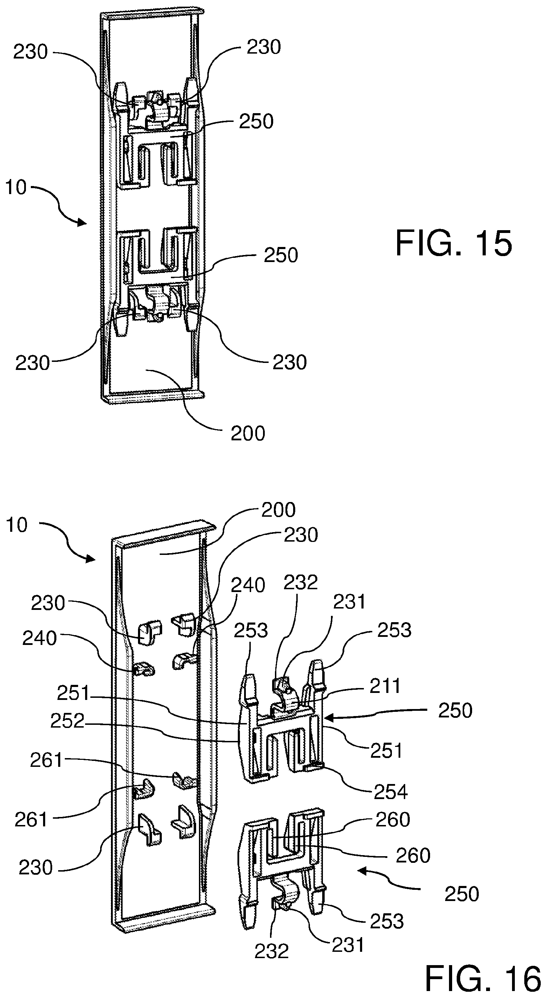

With reference to figures 15-20, a further embodiment of a second cover element 10 will now be described which in this case performs the function of a manual actuation pushbutton of a modular electrical apparatus 3, such as for example a modular pushbutton switch.

The second cover element 10 comprises a plate-shaped body 200 and coupling elements 230 fixed to the plate-shaped body 200, adapted and configured to mechanically couple the second cover element 12 to the cover plate 1, in particular to the base body 100 and more in particular to the assembly crosspieces 102. According to an embodiment, such coupling elements 230 makes it possible to constrain the plate-shaped body 200 of the second cover element 10 to the cover plate 1, in particular to the base body 100 and more in particular to the mounting crosspieces 102, so that the plate-shaped body 200 can move with respect to the mounting crosspieces 102 preferably between two opposite stroke end positions, in one of which the plate-shaped body 200 is relatively closer to the mounting crosspieces 102 and in the other of which the plate-shaped body 200 is relatively farther from the mounting crosspieces 102. For example, the aforesaid coupling elements 230 comprise snap-coupling teeth which once inserted inside the through hole 101 and that once having crossed the inner edges of the mounting crosspieces 102 pass beyond a snapping position engage with such inner edges, in the respective engagement seats 330 defined in the mounting crosspieces 102, in which said snap-coupling teeth can slide but from which they cannot be pulled out unless forcibly or intentionally in order to prevent an accidental detachment of the cover element 10 from the mounting crosspieces 102.

In the example in figures 15-20, the cover element 10 comprises at least one pressure transmission member 250 operatively coupled to the plate body 200 in order to transmit a pressure force applied to the plate-shaped body 200 to the modular electrical apparatus 3. In the example, the pressure transmission member 250 is coupled to the plate-shaped body 200 by means of two pins 240 which protrude from the plate-shaped body 200 to connect into respective engagement seats of the pressure transmission member 250, not shown in the figures.

In a particularly advantageous embodiment, the aforesaid pressure transmission member 250 comprises at least one stroke multiplier lever 251. In the example in figures 15 and 16, the second cover element 10 comprises two pressure transmission members 250 and each pressure transmission member 250 comprises two stroke multiplier levers 251 parallel and joined together by a connecting bar so as to be mutually integral in movement. For example, the pin engagement seats 240 are defined in the stroke multiplier levers 251.

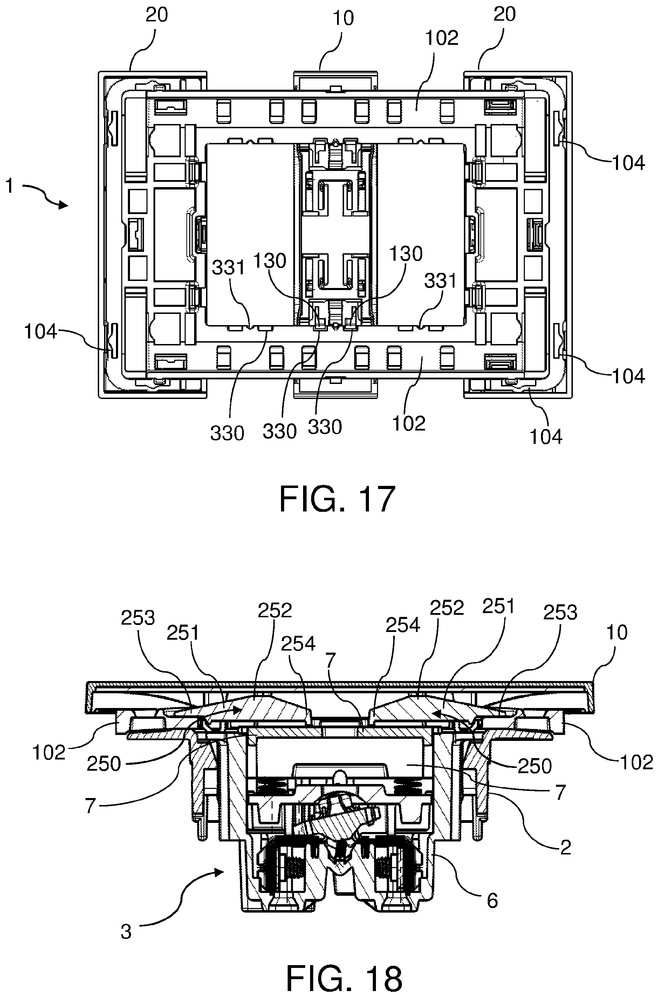

According to an advantageous embodiment, the stroke multiplier lever 251 comprises a fulcrum 252 reacting on the plate-shaped body 200 and two opposite end portions 253, 254 of which one end portion 253 reacts on a mounting crosspiece 102, and the other end portion 254 reacts on a movable portion of the modular electrical apparatus 3, e.g. the pushbutton 7, as shown in figures 18-20.

According to a possible embodiment, the second cover element 10 is coupled to the mounting crosspieces 102 so as to be able to translate with respect to the base body 100. According to a further possible embodiment, the second cover element 10 is coupled to the mounting crosspieces 102 so as to be able to rotate with respect to the base body 100. However, in a further particularly advantageous embodiment, the second cover element 10 is coupled to the mounting crosspieces 102 so as to be able to translate and rotate with respect to the base body 100. In the example in figures 15-20, the coupling elements 230 and the pressure transmission member 250 form a coupling system which allows the second cover element 10 to translate and rotate with respect to the base body 100.

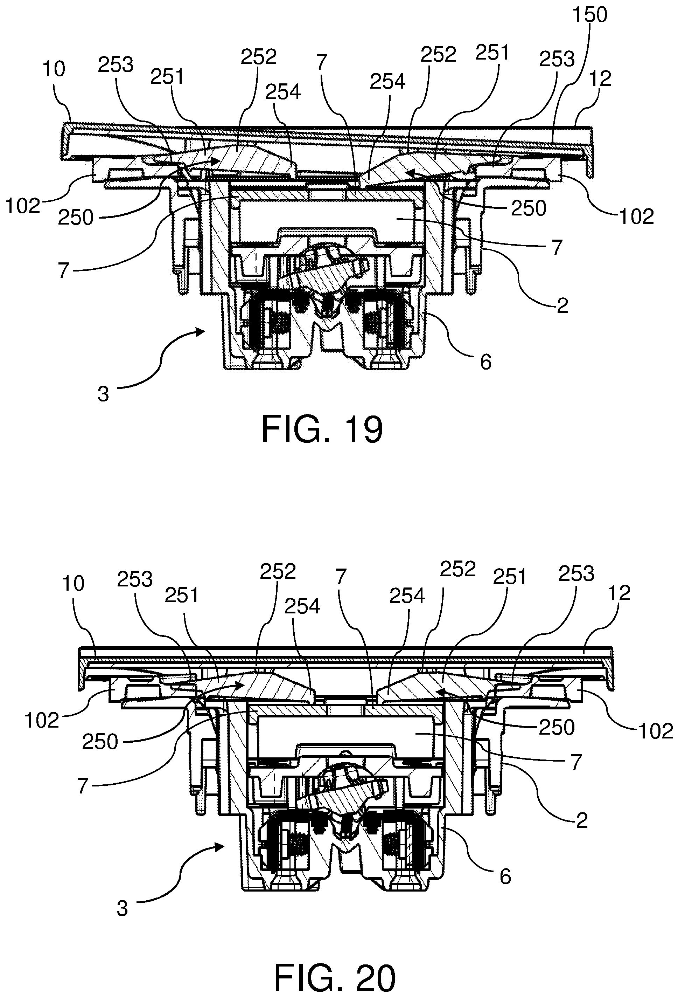

In figure 18, the second cover element 10 is shown in the resting position, in which this is located in the absence of external forces, in particular in absence of manual pressure forces. In figure 19, the second cover element 10 is shown in a first operating actuation condition that this assumes when a pressure force is applied on the cover element 10 on a part thereof which is imbalanced to the right in figure 19, or right end portion 150 of the second covering element 10. A rotation of the second cover element 10 with respect to the position of figure 18 is clearly shown. It is worth noting that the two pressure transmission members 250 are mutually independent, indeed in this case only the member 250 transmits the pressure onto the pushbutton 7. It is also worth noting that the stroke multiplier lever 251 can contain the stroke of the right end portion 150 required to move the pushbutton 7 along its working stroke. Indeed, although the pushbutton 7 is offset with respect to the right end portion 150, a small movement of the right end portion 150 is required with respect to a situation in which there no stroke multiplier lever 251. Since in the example shown the system is symmetrical, the same considerations apply if the pressure force is applied to an end portion of the second cover element 10 opposite to the right end portion 150. In figure 20, the second cover element 10 is shown in a second operating actuation condition that it assumes when a pressure force is applied on the cover element 10 onto its central part. A translation with respect to the position of figure 18 is clearly shown.

According to a particularly advantageous embodiment, also the second cover element 10 in figures 15-17 comprises alignment means 211, 231 adapted to be operatively interposed between the second cover element 10 and the cover plate **1,** and in particular the base body 100 and more in particular the mounting crosspiece 102, to maintain in the absence of external forces the plate-shaped body 200 in the stroke end position in which it is relatively further away from the cover plate 1 and in particular from the base body 100 and more in particular from the mounting crosspiece 102. Preferably, the alignment means 211, 231 comprise at least one elastic element 211 operatively interposed between the plate-shaped body 200 and the base body 100 and in particular the mounting crosspiece 102. In the example, such elastic element 211 is fixed to the pressure transmission member 250 and is preferably made in a single piece therewith.

Preferably, the alignment means 211, 231 make it possible to obtain an alignment between the plate-shaped body 200 and the base body 100 (and in particular the mounting crosspiece 102) along three mutually perpendicular axes. For example, in order to obtain a three-axial alignment, such alignment means 211, 231 an elastic element 211 adapted to apply a thrust force along an axis and comprising a centering tooth 231 on which the aforesaid elastic element 211 acts and which is wedge-shaped on a transverse plane, e.g. perpendicular, to said axis. In the example, the centering tooth 231 is inserted in a recess 331 with an at least partially counter-shaped profile provided on the mounting crosspiece 102. The elastic element 211 preferably performs an elastic suspension function for the plate-shaped body 200 of the cover element 10. Preferably, the centering tooth 231 is fixed to the elastic element 211 and more preferably forms a single piece with the latter. According to an advantageous embodiment, the centering tooth 231 comprises an abutment plate 232 which abuts in a respective seat 332 (figure 8B) defined on an edge of the mounting crosspieces 102 which delimits the through opening 101, i.e. on an inner edge. The pressure transmission member 250 in this case also acts as a support device for the aforesaid alignment means 211, 231. Also in this case, the aforesaid support device is connectable or coupled, reversibly or irreversibly to the plate-shaped body 200. Also in this case, preferably, the second cover element 10 comprises a centering system adapted to center the support device with respect to the plate-shaped body 200, preferably along two or three axes which are perpendicular to one another. In the example of figures 15-17, the centering system is a distributed centering system which comprises for each support device 250 (or pressure transmission member 250) a pair of mutually parallel arms 260 adapted to interfere with a pair of respective abutment walls 261 protruding from the plate-shaped body 200 in order to counteract a rotation of the support device 250 with respect to the plate-shaped body 200 about an axis perpendicular to the main faces of the plate-shaped body 200, and whereby makes it possible to center the support device, i.e. in this case the pressure transmission member 250, with respect to the plate-shaped body 200 along two mutually perpendicular axes. Moreover, by virtue of the provision of the alignment system 211, 231 the plate-shaped body 200 in absence of external forces, i.e. in the situation in figure 18, is aligned with respect to the mounting crosspieces 102 also with respect to a third axis perpendicular to said two axes, so that the plate-shaped body 200 is aligned with respect to the mounting crosspiece 102 along three mutually perpendicular axes.

From the description above, it is apparent that a cover plate of the type described above can achieve the predetermined objects making it possible to solve both the problems of appearance and of function described above with reference to the cover plates of the prior art.

Obviously, a person skilled in art may make further changes and variants to the cover plate and to the group of parts described above all without departing from the scope of protection of the invention, as defined in the following claims.

## Claims

1. A composite cover plate (1) for wall-mounting modular electric apparatuses (3), comprising a frame-shaped base body (100) which extends about a through opening (101), comprising two cross members (102) arranged on opposite sides with respect to the through opening (101), two connection uprights (103) arranged on opposite sides with respect to the through opening (101) and adapted to connect the two cross members (102) to each other;
wherein the composite cover plate comprises:
- a plurality of first cover elements (20) comprising one cover element (20) fixed to one of said connection uprights (103) and one cover element (20) fixed to the other of said connection uprights (103), wherein the first cover elements (20) are such as to each cover a respective connection upright (103) and are fixed to the respective connection uprights (103) by means of interlocking and snap fixing elements;
wherein
- the interlocking and snap fixing elements comprise elastically deformable elements (104) arranged on one or more peripheral edges (113) of the connection uprights (103) wherein the elastically deformable elements (104) are arranged close to a respective through opening (105) defined in the thickness of the connection uprights (103);
- the elastically deformable elements (104) are adapted and configured for being engaged with seats (106) or protrusions (114) of the first cover elements (120); **characterized in that** the seats (106) or protrusions (114) are disposed on a rear face (107) of the first cover elements (20) facing towards the respective connection upright (103);
- the elastically deformable elements (104) are wave-shaped bridges and have a rounded middle portion and two opposite straight end portions.

2. A composite cover plate (1) according to claim 1, wherein such elastically deformable elements (104) are made in a single piece with the connection uprights (103).

3. A composite cover plate (1) according to any one of the previous claims, wherein the elastically deformable elements (104) are arranged by the side of the respective through opening (105) defined in the thickness of the connection uprights (103).

4. A composite cover plate (1) according to any one of the preceding claims, wherein the connection uprights (103) each comprise a fixing plate (123) to which a respective first cover element (20) is coupled.

5. A composite cover plate (1) according to claim 4, wherein the cross members (102) are in a retracted position with respect to the fixing plates (123).

6. A composite cover plate (1) according to claim **4,** wherein the elastically deformable elements (104) are arranged on such fixing plates (123).

7. A composite cover plate (1) according to any one of the preceding claims, comprising:
- a plurality of second cover elements (10, 11, 12) arranged side-by-side one another between the connection uprights (103) to wholly or partly cover the through opening (101);
- coupling elements (230) adapted to mechanically couple the second cover elements (10, 11, 12) to the cross members (102);
- wherein the second cover elements (10, 11, 12) overlap the cross members (102) to also cover the cross members (102), in addition to the through opening (101).

8. A composite cover plate (1) according to claim 7, wherein the second cover elements (10, 11, 12) are interposed between the first cover elements (20).

9. A composite cover plate (1) according to claims 7 or 8, wherein the plurality of the second cover elements (10, 11, 12) together with the plurality of the first cover elements (20) defines an array of cover elements having a flat front face.

10. A composite cover plate (1) according to claim **7,** wherein at least one of the second cover elements (10, 11, 12) comprises a plate-shaped body (200) and wherein the coupling elements (230) are fixed to the plate-shaped body (200) and are adapted and configured for mechanically coupling the cover element (10, 11, 12) to the base body (100), wherein the coupling elements (230) allow the plate-shaped body (200) of the second cover element (10, 11, 12) to be constrained to the base body (100) so that the plate-shaped body (200) can move with respect to the base body (100) between two opposite stroke end positions, in one of which the plate-shaped body (200) is relatively closer to the cross members (102) and in the other of which the plate-shaped body (200) is relatively further away from the cross members (102) .

11. A composite cover plate (1) according to any one of the preceding claims, wherein said on one or more peripheral edges (113) are outer edges.

12. A composite cover plate (1) according to any one of the preceding claims, wherein said elastically deformable elements (104) are arranged on more peripheral edges (113) of each connection upright.

13. A composite cover plate (1) according to any one of the preceding claims, wherein each connection upright (103) comprises a distributed system of coupling elements comprising at least one of said elastically deformable elements (104) arranged on a peripheral edge (113) and at least one coupling element (118) made in the thickness of the connection upright (103) and arranged spaced from said the peripheral edge (113).

14. A group of parts for wall-mounting modular electric apparatuses (3) comprising:
- a supporting frame (2), that can be fixed to a wall, having a frame-shaped body which extends about a mounting window (5);
- a plurality of modular electric apparatuses (3) installed side-by-side one another in the mounting window (5);
**characterized in that** the group of parts comprises a composite cover plate (1) according to any one of the preceding claims, fixed to the supporting frame (2).

15. A group of parts for wall-mounting modular electric apparatuses (3) according to claim 13, wherein:
- the supporting frame (2) comprises a plurality of fixing seats or channels (25);
- the composite cover plate (1) preferably comprises a plurality of fixing teeth (125which protrude from the base body (100) towards the supporting frame (2), each of which is adapted to engage in a respective fixing seat or channel (25).

## Patentansprüche

1. Verbunddeckplatte (1) für wandmontierte modulare elektrische Vorrichtungen (3), umfassend einen rahmenförmigen Grundkörper (100), der sich um eine Durchgangsöffnung (101) erstreckt, umfassend zwei Querelementen (102), die auf gegenüberliegenden Seiten in Bezug auf die Durchgangsöffnung (101) angeordnet sind, sowie zwei Verbindungsständer (103), die auf gegenüberliegenden Seiten in Bezug auf die Durchgangsöffnung (101) angeordnet sind und eingerichtet sind, die beiden Querelementen (102) miteinander zu verbinden;
wobei die Verbunddeckplatte umfasst:
eine Mehrzahl von ersten Abdeckungselementen (20) umfassend ein Abdeckungselement (20), das an einem der Verbindungsständer (103) befestigt wird, und ein Abdeckungselement (20), das an dem anderen der Verbindungsständer (103) befestigt wird, wobei die ersten Abdeckungselemente (20) so ausgebildet sind, dass jedes einen jeweiligen Verbindungsständer (103) abdeckt, und sie an den jeweiligen Verbindungsständern (103) mittels Steck- und Schnappbefestigungselementen befestigt sind; wobei
die Steck- und Schnappbefestigungselemente elastisch verformbare Elemente (104) umfassen, die an einer oder mehreren Umfangsrändern (113) der Verbindungsständer (103) angeordnet sind, wobei die elastisch verformbaren Elemente (104) in der Nähe einer jeweiligen Durchgangsöffnung (105) angeordnet sind, die in der Dicke der Verbindungsständer (103) definiert wird;
die elastisch verformbaren Elemente (104) eingerichtet und dazu konfiguriert sind, mit Sitzen (106) oder Vorsprüngen (114) der ersten Abdeckungselemente (120) in Eingriff zu kommen; **dadurch gekennzeichnet, dass** die Sitze (106) oder Vorsprünge (114) an einer Rückseite (107) der ersten Abdeckungselemente (20) angeordnet sind, die dem jeweiligen Verbindungsständer (103) zugewandt ist;
die elastisch verformbaren Elemente (104) wellenförmige Brücken sind und einen abgerundeten Mittelabschnitt sowie zwei gegenüberliegende gerade Endabschnitte aufweisen.

2. Verbunddeckplatte (1) nach Anspruch 1, wobei die elastisch verformbaren Elemente (104) einstückig mit den Verbindungsständern (103) ausgebildet sind.

3. Verbunddeckplatte (1) nach einem der vorhergehenden Ansprüche, wobei die elastisch verformbaren Elemente (104) an der Seite der j eweiligen Durchgangsöffnung (105) angeordnet sind, die in der Dicke der Verbindungsständer (103) definiert wird.

4. Verbunddeckplatte (1) nach einem der vorhergehenden Ansprüche, wobei jeder Verbindungsständer (103) eine Befestigungsplatte (123) umfasst, an der ein jeweiliges erstes Abdeckungselement (20) gekoppelt ist.

5. Verbunddeckplatte (1) nach Anspruch 4, wobei die Querelemente (102) in einer eingezogenen Position in Bezug auf die Befestigungsplatten (123) angeordnet sind.

6. Verbunddeckplatte (1) nach Anspruch 4, wobei die elastisch verformbaren Elemente (104) an solchen Befestigungsplatten (123) angeordnet sind.

7. Verbunddeckplatte (1) nach einem der vorhergehenden Ansprüche, umfassend:
- eine Mehrzahl von zweiten Abdeckungselementen (10, 11, 12), die nebeneinander zwischen den Verbindungsständern (103) angeordnet sind, um die Durchgangsöffnung (101) ganz oder teilweise abzudecken;
- Kupplungselemente (230), die eingerichtet sind, die zweiten Abdeckungselemente (10, 11, 12) mechanisch an den Querelementen (102) zu koppeln;
- wobei die zweiten Abdeckungselemente (10, 11, 12) an die Querelemente (102) überlappen, um zusätzlich zu der Durchgangsöffnung (101) auch die Querelemente (102) abzudecken.

8. Verbunddeckplatte (1) nach Anspruch 7, wobei die zweiten Abdeckungselemente (10, 11, 12) zwischen den ersten Abdeckungselementen (20) angeordnet sind.

9. Verbunddeckplatte (1) nach den Ansprüchen 7 oder 8, wobei die Mehrzahl der zweiten Abdeckungselemente (10, 11, 12) zusammen mit der Mehrzahl der ersten Abdeckungselemente (20) eine Anordnung von Abdeckungselementen aufweisend eine flache Vorderseite definiert.

10. Verbunddeckplatte (1) nach Anspruch 7, wobei mindestens eines der zweiten Abdeckungselemente (10, 11, 12) einen plattenförmigen Körper (200) umfasst und wobei die Kupplungselemente (230) an dem plattenförmigen Körper (200) befestigt werden und eingerichtet und dazu konfiguriert sind, das Abdeckungselement (10, 11, 12) mechanisch an dem Grundkörper (100) zu koppeln, wobei die Kupplungselemente (230) dem plattenförmigen Körper (200) des zweiten Abdeckungselements (10, 11, 12) ermöglichen, mit dem Grundkörper (100) befestigt zu werden, sodass sich der plattenförmige Körper (200) in Bezug auf den Grundkörper (100) zwischen zwei gegenüberliegenden Hubendstellungen bewegen kann, in einer davon sich der plattenförmige Körper relativ näher an den Querelementen (102) befindet, und in der anderen davon sich der plattenförmige Körper (200) weiter weg von den Querelementen (102) befindet.

11. Verbunddeckplatte (1) nach einem der vorhergehenden Ansprüche, wobei die einen oder mehrere Umfangsränder (113) Außenränder sind.

12. Verbunddeckplatte (1) nach einem der vorhergehenden Ansprüche, wobei die elastisch verformbaren Elemente (104) an mehreren Umfangsrändern (113) jedes Verbindungsständers angeordnet sind.

13. Verbunddeckplatte (1) nach einem der vorhergehenden Ansprüche, wobei jeder Verbindungsständer (103) ein verteiltes System von Kupplungselementen umfasst, das mindestens eines der elastisch verformbaren Elemente (104), das an einem Umfangsrand (113) angeordnet ist, und mindestens ein Kupplungselement (118), das in der Dicke des Verbindungsständers (103) ausgebildet ist und in Abstand zu dem Umfangsrand (113) angeordnet ist, umfasst.

14. Gruppe von Teilen zur Wandmontage modularer elektrischer Vorrichtungen (3), umfassend:
einen Tragrahmen (2), der an einer Wand befestigt werden kann, aufweisend einen rahmenförmigen Körper, der sich um ein Montagefenster (5) erstreckt;
eine Mehrzahl von modularen elektrischen Vorrichtungen (3), die nebeneinander in dem Montagefenster (5) eingebaut sind;
**dadurch gekennzeichnet, dass** die Gruppe von Teilen eine Verbunddeckplatte (1) nach einem der vorhergehenden Ansprüche umfasst, die an dem Tragrahmen (2) befestigt ist.

15. Gruppe von Teilen zur Wandmontage modularer elektrischer Vorrichtungen (3), nach Anspruch 13, wobei:
- der Tragrahmen (2) eine Mehrzahl von Befestigungssitzen oder Kanälen (25) umfasst;
- die Verbunddeckplatte (1) vorzugsweise eine Mehrzahl von Befestigungszähnen (125) umfasst, die aus dem Grundkörper (200) zu dem Tragrahmen (2) vorstehen, jeder davon eingerichtet ist, mit einem jeweiligen Befestigungssitz oder Kanal (25) in Eingriff zu kommen.

## Revendications

1. Plaque de recouvrement composite (1) pour appareils électriques modulaires (3) à montage mural, comprenant un corps de base en forme de cadre (100) qui s'étend autour d'une ouverture traversante (101), comprenant deux traverses (102) disposées sur des côtés opposés par rapport à l'ouverture traversante (101), deux montants de liaison (103) disposés sur des côtés opposés par rapport à l'ouverture traversante (101) et aptes à relier entre elles les deux traverses (102) ;
la plaque de recouvrement composite comprenant :
- une pluralité de premiers éléments de recouvrement (20) comprenant un élément de recouvrement (20) fixé à l'un desdits montants de liaison (103) et un élément de recouvrement (20) fixé à l'autre desdits montants de liaison (103), les premiers éléments de recouvrement (20) étant chacun aptes à recouvrir un montant de liaison respectif (103) et étant fixés aux montants de liaison respectifs (103) au moyen d'éléments de fixation encliquetables et d'emboîtement ;
dans lequel
- les éléments de fixation encliquetables et d'emboîtement comprennent des éléments élastiquement déformables (104) disposés sur un ou plusieurs bords périphériques (113) des montants de liaison (103) dans lequel les éléments élastiquement déformables (104) sont disposés à proximité d'une ouverture traversante respective (105) définie dans l'épaisseur des montants de liaison (103) ;
- les éléments élastiquement déformables (104) étant aptes et configurés pour s'engager avec des logements (106) ou des saillies (114) des premiers éléments de recouvrement (120) ; **caractérisé en ce que** les logements (106) ou les saillies (114) sont disposés sur une face arrière (107) des premiers éléments de recouvrement (20) orientée vers le montant de liaison respectif (103) ;
- les éléments élastiquement déformables (104) sont des ponts ondulés et présentent une portion médiane arrondie et deux portions d'extrémité opposées rectilignes.

2. Plaque de recouvrement composite (1) selon la revendication 1, dans laquelle lesdits éléments élastiquement déformables (104) sont réalisés en une seule pièce avec les montants de liaison (103).

3. Plaque de recouvrement composite (1) selon l'une quelconque des revendications précédentes, dans laquelle les éléments élastiquement déformables (104) sont disposés à côté de l'ouverture traversante respective (105) définie dans l'épaisseur des montants de liaison (103).

4. Plaque de recouvrement composite (1) selon l'une quelconque des revendications précédentes, dans laquelle les montants de liaison (103) comprennent chacun une plaque de fixation (123) à laquelle est couplé un premier élément de recouvrement respectif (20).

5. Plaque de recouvrement composite (1) selon la revendication 4, dans laquelle les traverses (102) sont en position en retrait par rapport aux plaques de fixation (123).

6. Plaque de recouvrement composite (1) selon la revendication 4, dans laquelle les éléments élastiquement déformables (104) sont disposés sur lesdites plaques de fixation (123).

7. Plaque de recouvrement composite (1) selon l'une quelconque des revendications précédentes, comprenant : une pluralité de deuxièmes éléments de recouvrement (10, 11, 12) disposés côte à côte entre les montants de liaison (103) afin de recouvrir totalement ou partiellement l'ouverture traversante (101) ;
- des éléments de couplage (230) aptes à coupler mécaniquement les deuxièmes éléments de recouvrement (10, 11, 12) aux traverses (102) ;
- dans laquelle les deuxièmes éléments de recouvrement (10, 11, 12) se superposent aux traverses (102) pour recouvrir également les traverses (102), en plus de l'ouverture traversante (101).

8. Plaque de recouvrement composite (1) selon la revendication 7, dans laquelle les deuxièmes éléments de recouvrement (10, 11, 12) sont interposés entre les premiers éléments de recouvrement (20).

9. Plaque de recouvrement composite (1) selon les revendications 7 ou 8, dans laquelle la pluralité des deuxièmes éléments de recouvrement (10, 11, 12) avec la pluralité des premiers éléments de recouvrement (20) définit un ensemble d'éléments de recouvrement présentant une face frontale plane.

10. Plaque de recouvrement composite (1) selon la revendication 7, dans laquelle au moins l'un des deuxièmes éléments de recouvrement (10, 11, 12) comprend un corps en forme de plaque (200) et dans laquelle les éléments de couplage (230) sont fixés au corps en forme de plaque (200) et sont aptes et configurés pour coupler mécaniquement l'élément de recouvrement (10, 11, 12) au corps de base (100), les éléments de couplage (230) permettant au corps en forme de plaque (200) de l'élément de recouvrement secondaire (10, 11, 12) d'être contraint au corps de base (100) de manière que le corps en forme de plaque (200) puisse se déplacer par rapport au corps de base (100) entre deux positions extrêmes opposées, dans l'une desquelles le corps en forme de plaque est relativement plus proche des traverses (102) et dans l'autre desquelles le corps en forme de plaque (200) est relativement plus éloigné des traverses (102).

11. Plaque de recouvrement composite (1) selon l'une quelconque des revendications précédentes, dans laquelle lesdits un ou plusieurs bords périphériques (113) sont des bords extérieurs.

12. Plaque de recouvrement composite (1) selon l'une quelconque des revendications précédentes, dans laquelle lesdits éléments élastiquement déformables (104) sont disposés sur plusieurs bords périphériques (113) de chaque montant de liaison.

13. Plaque de recouvrement composite (1) selon l'une quelconque des revendications précédentes, dans laquelle chaque montant de liaison (103) comprend un système distribué d'éléments de couplage comprenant au moins un desdits éléments élastiquement déformables (104) disposé sur un bord périphérique (113) et au moins un élément de couplage (118) réalisé dans l'épaisseur du montant de liaison (103) et disposé à distance dudit bord périphérique (113).

14. Ensemble de pièces pour appareils électriques modulaires (3) à montage mural comprenant :
- un cadre de support (2), pouvant être fixé à un mur, présentant un corps en forme de cadre qui s'étend autour d'une fenêtre de montage (5) ;
- une pluralité d'appareils électriques modulaires (3) installés côte à côte dans la fenêtre de montage (5) ;
**caractérisé en ce que** l'ensemble de pièces comprend une plaque de recouvrement composite (1) selon l'une quelconque des revendications précédentes, fixée au cadre de support (2).

15. Ensemble de pièces pour appareils électriques modulaires (3) selon la revendication 13, dans lequel :
- le cadre de support (2) comprend une pluralité de logements ou de canaux de fixation (25) ;
- la plaque de recouvrement composite (1) comprend de préférence une pluralité de dents de fixation (125) qui font saillie à partir du corps de base (100) vers le cadre de support (2), chacune étant apte à s'engager dans un logement ou canal de fixation respectif (25).
